# FASCICULE DE BREVET EUROPEEN

(11) **EP 0 490 762 B1**
(45) Date de publication et mention de la délivrance du brevet: **19.04.1995**
(21) Numéro de dépôt: 91403358.4
(22) Date de dépôt: 11.12.1991
(51) Int. Cl.: A47J 27/21, H01R 9/24

(54) **Bouilloire électrique à bloc de connexion et socle**
Elektrischer Warmwasserspeicher mit Verbindungsblock und Sockel
Electrical boiler with connection block and socket

(30) Priorité: 14.12.1990 FR 9015689
(43) Date de publication de la demande: 17.06.1992
(73) Titulaire: SEB S.A., F-21260 Selongey (FR)
(72) Inventeur: Lacombe, Jacques, F-70100 Arc les Gray (FR)
(74) Mandataire: Keib, Gérard

(56) Documents cités:
- EP-A- 0 332 445
- EP-A- 0 380 416
- GB-A- 2 204 218
- GB-A- 2 222 025
- US-A- 4 713 522

## Description

La présente invention concerne une bouilloire électrique à socle relié au cordon d'alimentation électrique.

La demanderesse a décrit dans sa demande de brevet français FR-A-2 652 252 une bouilloire électrique comprenant un récipient à eau et une résistance électrique pour chauffer cette eau. Ce récipient repose sur un socle dans lequel pénètre le cordon d'alimentation électrique de la bouilloire.

La paroi latérale du récipient porte un bloc de commande et de connexion électrique duquel font saillie des broches venant, lorsque le récipient est posé sur le socle, en contact avec des lamelles conductrices logées dans une protubérance du socle, . Cette protubérance comprend à cet effet des ouvertures permettant l'introduction des broches dans ladite protubérance.

Dans cette réalisation, les broches faisant saillie du bloc de connexion sont rectilignes et s'étendent parallèlement au fond du récipient à eau.

Lorsque le récipient est posé sur le socle, ces broches s'engagent dans des fentes ménagées sur la face de la protubérance qui est adjacente au récipient. Ces fentes s'ouvrent à la fois vers le bloc de connexion et vers le haut, c'est-à-dire qu'elles débouchent au sommet de la protubérance.

La surface de ces fentes qui est ouverte vers l'extérieur est ainsi relativement importante, de sorte que l'intérieur de la protubérance et en particulier les lamelles de contact sont relativement exposées à la poussière et autres impuretés susceptibles de pénétrer par ces fentes.

Par ailleurs, du fait de l'orientation des broches parallèlement au fond du récipient, les lamelles de contact s'étendent à l'intérieur de la protubérance sensiblement perpendiculairement au fond du socle. De ce fait, en raison de la longueur des lamelles, la protubérance doit présenter une hauteur suffisante, au détriment de la compacité du socle.

D'autre part, également du fait de l'orientation des broches parallèlement au fond du récipient, rien n'interdit à un utilisateur de brancher ces broches directement à une fiche de connexion standard, sans utiliser le socle prévu à cet effet. Cette possibilité va à l'encontre de la sécurité qui est recherchée dans un tel appareil électrique.

On connait selon les EP - A - 0 332 445 et GB - A - 2 204 218 des bouilloires comportant des broches de connexion ayant une partie parallèle et une partie perpendiculaire au fond du récipient.

On connait également selon le EP - A - 0 380 416 une bouilloire comportant les caractéristiques énoncées dans le préambule de la revendication 1.

Le but de la présente invention est de remédier aux inconvénients des appareils ci-dessus, en créant une bouilloire améliorée apportant un certain nombre d'avantages techniques non seulement à l'égard de l'appareil précité, mais également à l'égard des bouilloires connues par ailleurs.

L'invention vise ainsi une bouilloire électrique comprenant un récipient à eau et une résistance électrique pour chauffer cette eau, ce récipient reposant sur un socle dans lequel pénètre le cordon d'alimentation électrique de la bouilloire, la paroi latérale du récipient portant un bloc de commande et de connexion électrique duquel font saillie des broches venant en contact avec des lamelles conductrices logées dans une protubérance du socle, lorsque le récipient est posé sur ce dernier, ladite protubérance comprenant des ouvertures permettant l'introduction des broches dans ladite protubérance.

Suivant l'invention, cette bouilloire est caractérisée en ce que lesdites broches sont coudées à angle droit après leur montage dans le bloc de connexion et comportent une partie s'étendant à partir du bloc de connexion sensiblement parallèlement au fond du récipient et une partie s'étendant vers le bas sensiblement perpendiculairement au fond précité, des ouvertures étant prévues uniquement sur le sommet de la protubérance du socle pour recevoir l'extrémité desdites broches et guider celles-ci vers les lamelles.

Grâce à la forme coudée à 90° des broches de connexion, les ouvertures ménagées au sommet de la protubérance du socle peuvent avoir des dimensions relativement réduites. Il suffit en effet que leur section dépasse légèrement celle des broches.

Grâce à la dimension réduite de ces ouvertures, l'intérieur de la protubérance et en particulier les lamelles de contact sont moins exposées aux impuretés. Ainsi, on peut à la rigueur se dispenser de ménager derrière ces ouvertures un volet escamotable lors de l'engagement des broches dans ces ouvertures.

Par ailleurs, du fait que la partie des broches qui s'étend vers le bas soit relativement rapprochée du bloc de connexion, il devient impossible d'engager les broches dans une prise standard pour alimenter la bouilloire autrement que par le socle. Une plus grande sécurité est ainsi garantie aux utilisateurs.

Selon une version préférée de l'invention, les lamelles conductrices s'étendent sensiblement parallèlement au fond du socle.

Grâce à cette disposition des lamelles, la hauteur de la protubérance peut être réduite, ce qui permet d'améliorer la compacité du socle.

Pour réaliser les broches coudées, il suffit de couder à angle droit les broches rectilignes déjà montées dans un bloc de connexion connu disponible dans le commerce.

D'autres particularités et avantages de l'invention apparaîtront encore dans la description ci-après.

Aux dessins annexés donnés à titre d'exemples non limitatifs :

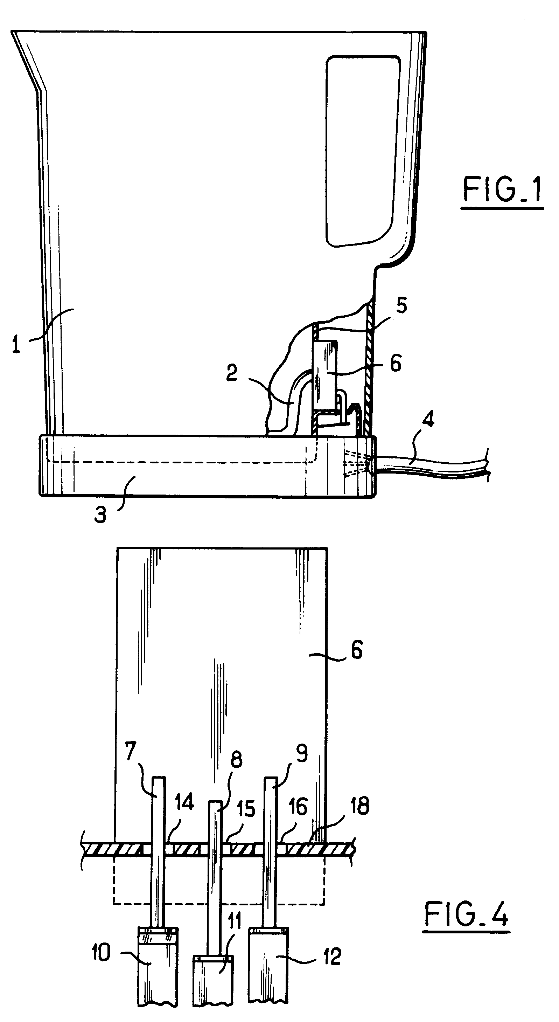

- la figure 1 est une vue en élévation, avec arrachement, d'une bouilloire à socle conforme à l'invention,
- la figure 2 est une vue à plus grande échelle de la partie arrachée de la figure 1, montrant en détail les broches du bloc de connexion et la protubérance du socle,
- la figure 3 est une vue analogue à la figure 2, montrant le récipient de la bouilloire séparé du socle,
- la figure 4 est une vue en coupe suivant le plan IV-IV de la figure 2.

Dans la réalisation représentée sur les figures annexées, la bouilloire électrique comprend principalement un récipient à eau 1 et une résistance électrique 2 pour chauffer cette eau. Le récipient 1 repose sur un socle 3 dans lequel pénètre le cordon 4 d'alimentation électrique de la bouilloire. La paroi latérale 5 du récipient 1 porte un bloc 6 de commande et de connexion électrique duquel font saillie des broches 7, 8, 9 (voir figure 4) venant en contact avec des lamelles conductrices 10, 11, 12 logées dans une protubérance 13 du socle 3, lorsque le récipient 1 est posé sur ce dernier. Cette protubérance 13 comprend des ouvertures 14, 15, 16 permettant l'introduction des broches 7, 8, 9 dans cette protubérance.

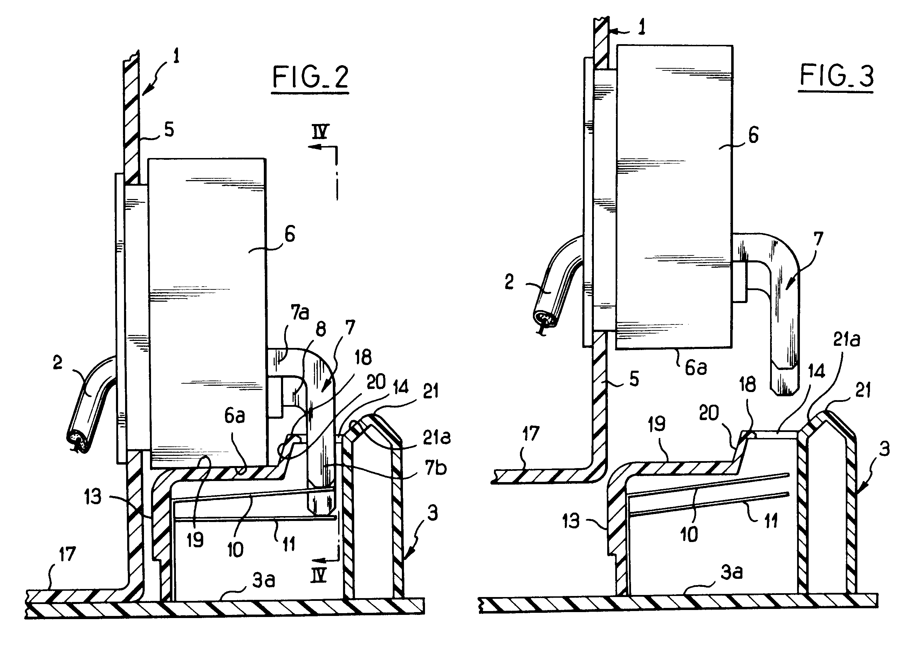

Conformément à l'invention, les broches 7, 8, 9 sont coudées sensiblement à angle droit et comportent (voir figures 2 et 3) chacune une partie telle que 7a s'étendant à partir du bloc de connexion 6 sensiblement parallèlement au fond 17 du récipient 1 et une partie telle que 7b s'étendant vers le bas sensiblement perpendiculairement au fond 17 précité.

On voit sur les figures 2, 3 et 4 que des ouvertures 14, 15, 16 sont prévues uniquement sur le sommet 18 de la protubérance 13 du socle 3 pour recevoir l'extrémité telle que 7b desdites broches 7, 8, 9 et guider celles-ci vers les lamelles 10, 11, 12.

La section des ouvertures 14, 15, 16 dépasse à peine celle des broches 7, 8, 9.

Les figures 2 et 3 montrent d'autre part que les lamelles conductrices 10, 11, 12 s'étendent sensiblement parallèlement au fond 3a du socle 3.

Dans la réalisation représentée, le bloc de connexion 6 est d'un type connu, tel que décrit par exemple dans la demande de brevet français FR-A-2 652 252 de la demanderesse, les broches initialement rectilignes ayant été coudées après leur montage dans le bloc de connexion 6.

On voit également sur les figures 2 et 3, que la protubérance 13 du socle 3 comporte sur sa partie supérieure une surface horizontale 19 servant s'assise pour la partie inférieure 6a du bloc de connexion 6. Cette surface d'assise 19 est limitée latéralement par une bordure 20 inclinée vers cette surface 19 et au sommet 18 de laquelle sont ménagées les ouvertures 14, 15, 16 d'introduction des broches 7, 8, 9.

Par ailleurs, la protubérance 13 comporte à côté des ouvertures 14, 15, 16 d'introduction des broches et à l'opposé de la surface d'assise 19 pour le bloc de connexion 6, une saillie 21 bordée latéralement par un flanc 21a incliné vers les ouvertures 14, 15, 16.

On voit en outre sur les figures 2 et 3, que la partie 7a des broches 7, 8, 9 qui s'étend vers le bas sensiblement perpendiculairement au fond 17 du récipient est suffisamment rapprochée du bloc de connexion 6 pour interdire le raccordement des broches 7, 8, 9 à une fiche de connexion standard reliée à un cordon d'alimentation électrique.

De plus, les parties 7a des broches 7, 8, 9 qui s'étendent vers le bas sensiblement perpendiculairement au fond 17 du récipient sont toutes situées dans un plan parallèle au bloc de connexion 6. Cette disposition interdit également le raccordement des broches 7, 8, 9 à une fiche standard contrairement au cas des broches rectilignes connues qui ne sont pas toutes disposées dans un même plan.

Lors du fonctionnement de la bouilloire, le récipient 1 repose sur le socle 3, comme indiqué sur la figure 2. Les broches 7, 8, 9 du bloc de connexion 6 sont en contact avec les lamelles 10, 11, 12, qui sont elles-mêmes reliées au cordon d'alimentation 4.

Après mise en route du chauffage, qui est commandé par un levier non représenté agissant sur le bloc de connexion 6, la résistance chauffante est alimentée et celle-ci chauffe l'eau. Lorsque la température désirée est atteinte, le bloc de connexion 6 coupe l'alimentation électrique de la résistance 2. L'utilisateur peut alors utiliser l'eau chaude pour préparer du thé ou autre boisson. A cet effet, il retire le récipient 1 du socle 2, ce qui a pour effet de séparer les broches 7, 8, 9 des lamelles 10, 11, 12 contenues dans la protubérance 3.

Pour réchauffer l'eau du récipient 1, il suffit de poser celui-ci sur le socle 3, ce qui amène les broches 7, 8, 9 à nouveau en contact avec les lamelles 10, 11, 12.

## Revendications

1. Bouilloire électrique comprenant un récipient à eau (1) et une résistance électrique (2) pour chauffer cette eau, ce récipient reposant sur un socle (3) dans lequel pénètre le cordon (4) d'alimentation électrique de la bouilloire, la paroi latérale (5) du récipient (1) portant un bloc (6) de commande et de connexion électrique duquel font saillie des broches (7, 8, 9) venant en contact avec des lamelles conductrices (10, 11, 12) logées dans une protubérance (13) du socle (3), lorsque le récipient (1) est posé sur ce dernier, ladite protubérance (13) comprenant des ouvertures (14, 15, 16) permettant l'introduction des broches (7, 8, 9) dans ladite protubérance, caractérisée en ce que lesdites broches (7, 8, 9) sont coudées à angle droit après leur montage dans le bloc de connexion (6) et comportent une partie (7a) s'étendant à partir du bloc de connexion (6) sensiblement parallèlement au fond (17) du récipient et une partie (7b) s'étendant vers le bas sensiblement perpendiculairement au fond (17) précité, des ouvertures (14, 15, 16) étant prévues uniquement sur le sommet (18) de la protubérance (13) du socle (3) pour recevoir l'extrémité desdites broches (7, 8, 9) et guider celles-ci vers les lamelles (10, 11, 12).

2. Bouilloire conforme à la revendication 1, caractérisée en ce que les lamelles (10, 11, 12) conductrices s'étendent sensiblement parallèlement au fond (3a) du socle (3).

3. Bouilloire conforme à l'une des revendications 1 ou 2, caractérisée en ce que la protubérance (13) du socle (3) comporte sur sa partie supérieure une surface (19) servant d'assise pour la partie inférieure (6a) du bloc de connexion (6), cette surface (19) de la protubérance étant limitée latéralement par une bordure (20) inclinée vers cette surface (19) et au sommet (18) de laquelle sont ménagées les ouvertures (14, 15, 16) d'introduction des broches (7, 8, 9).

4. Bouilloire conforme à la revendication 3, caractérisée en ce que la protubérance (13) comporte à côté des ouvertures (14, 15, 16) d'introduction des broches (7, 8, 9) à l'opposé de la surface d'assise (19) pour le bloc de connexion (6) une saillie (21) bordée latéralement par un flanc (21a) incliné vers lesdites ouvertures (14, 15, 16).

5. Bouilloire conforme à l'une des revendications 1 à 4, caractérisée en ce que la partie (7b) des broches (7, 8, 9) qui s'étend vers le bas sensiblement perpendiculairement au fond (17) du récipient est suffisamment rapprochée du bloc de connexion (6) pour interdire le raccordement des broches (7, 8, 9) à une fiche de connexion standard reliée à un cordon d'alimentation électrique.

6. Bouilloire conforme à l'une des revendications 1 à 5, caractérisée en ce que les parties (7b) des broches (7, 8, 9) qui s'étendent vers le bas sensiblement perpendiculairement au fond (17) du récipient sont toutes situées dans un plan parallèle au bloc de connexion (6).

## Claims

1. An electric kettle comprising a water vessel (1) and an electric resistor (2) for heating the water, the vessel resting on a stand (3) into which the electric supply lead (4) of the kettle is inserted, the side wall (5) of the vessel (1) bearing a control and electric connection unit from which pins (7, 8, 9) project and come into contact with conductive strips (10, 11, 12) received in a protuberance (13) on the stand (3) when the vessel (1) is placed on the stand, the protuberance (13) having openings (14, 15, 16) for inserting the pins (7, 8, 9) into the protuberance, characterised in that the pins (7, 8, 9) are bent at a right angle after being fitted in the connection unit (6) and comprise a part (7a) extending from the connection unit (6) substantially parallel to the bottom (17) of the vessel and a part (7b) extending downwards substantially perpendicularly to the aforementioned bottom (17), only the top (18) of the protuberance (13) on the stand (3) being formed with apertures (14, 15, 16) for receiving the ends of the pins (7, 8, 9) and guiding them towards the strips (10, 11, 12).

2. A kettle according to claim 1, characterised in that the conductive strips 10, 11, 12) extend substantially parallel to the bottom (3a) of the stand (3).

3. A kettle according to claim 1 or 2, characterised in that the upper part of the protuberance (13) on the stand (3) has a surface (19) serving as a seat for the bottom part (6a) of the connection unit (6), the surface (19) being laterally bounded by an edge (20) which slopes towards the surface (19) and the top (18) of which is formed with the openings (14, 15, 16) for inserting the pins (7, 8, 9).

4. A kettle according to claim 3, characterised in that, alongside the openings (14, 15, 16) for inserting the pins (7, 8, 9) and remote from the seat surface (19) for the connection unit (6), the protuberance (13) has a projection (21) laterally bounded by a flank (21a) which slopes towards the openings (14, 15, 16).

5. A kettle according to any of claims 1 to 4, characterised in that the part (7b) of the pins (7, 8, 9) which extends downwards substantially perpendicularly to the bottom (17) of the vessel is sufficiently near the connection unit (6) to prevent the pins (7, 8, 9) from being connected to a standard connection plug connected to an electric supply lead.

6. A kettle according to any of claims 1 to 5, characterised in that the parts (7b) of the pins (7, 8, 9) which extend downwards substantially perpendicularly to the bottom (17) of the vessel are all situated in a plane parallel to the connection unit 6.

## Patentansprüche

1. Elektrischer Warmwasserbereiter mit einem Wasserbehälter (1) und einem elektrischen Widerstand (2) zur Erwärmung des Wassers, wobei der Behälter auf einem Sockel (3) aufliegt, in den die Leitungsschnur (4) für die elektrische Stromversorgung des Warmwasserbereiters hineingeht, wobei die Seitenwand (5) des Behälters (1) einen elektrischen Steuer- und Anschlußblock (6) trägt, von dem Anschlußstifte (7, 8, 9) hervorstehen, die mit in einem Höcker (13) des Sockels (3) untergebrachten Leiterlamellen (10, 11, 12) in Kontakt kommen, wenn der Behälter (1) auf diesen aufgesetzt wird, wobei der Höcker (13) Öffnungen (14, 15, 16) aufweist, die das Einführen der Anschlußstifte (7, 8, 9) in den Höcker ermöglichen, dadurch gekennzeichnet, daß die Anschlußstifte (7, 8, 9) nach ihrer Montage im Verbindungsblock (6) rechtwinklig umgebogen werden und einen sich vom Anschlußblock (6) im wesentlichen parallel zum Boden (17) des Behälters erstreckenden Teil (7a) sowie einen sich im wesentlichen senkrecht zu diesem Boden (17) nach unten erstreckenden Teil (7b) aufweisen, wobei Öffnungen (14, 15, 16) ausschließlich am Scheitel (18) des Höckers (13) des Sockels (3) vorgesehen sind, um das Ende der Anschlußstifte (7, 8, 9) aufzunehmen und diese zu den Lamellen (10, 11, 12) zu führen.

2. Warmwasserbereiter nach Anspruch 1, dadurch gekennzeichnet, daß sich die leitenden Lamellen (10, 11, 12) im wesentlichen parallel zum Boden (3a) des Sockels (3) erstrecken.

3. Warmwasserbereiter nach einem der Ansprüche 1 oder 2, dadurch gekennzeichnet, daß der Höcker (13) des Sockels (3) auf seinem oberen Teil eine Fläche (19) aufweist, die als Auflager für den unteren Teil (6a) des Anschlußblocks (6) dient, wobei diese Fläche (19) seitlich durch einen zu der Fläche (19) hin geneigten Rand (20) begrenzt ist, und daß auf dem Scheitel (18) des Sockels die Öffnungen (14, 15, 16) für die Einführung der Anschlußstifte (7, 8, 9) angebracht sind.

4. Warmwasserbereiter nach Anspruch 1, dadurch gekennzeichnet, daß der Höcker (13) neben den Öffnungen (14, 15, 16) für die Einführung der Anschlußstifte (7, 8, 9) auf der der Auflagefläche (19) für den Anschlußblock (6) entgegengesetzten Seite einen Vorsprung (21) aufweist, der seitlich durch eine zu den Öffnungen (14, 15, 16) hin geneigte Flanke (21a) begrenzt ist.

5. Warmwasserbereiter nach einem der Ansprüche 1 bis 4, dadurch gekennzeichnet, daß der Teil (7a) der Anschlußstifte (7, 8, 9), der sich im wesentlichen senkrecht zu dem Boden (17) des Behälters nach unten erstreckt, ausreichend nahe an dem Anschlußblock (6) liegt, um die Verbindung der Anschlußstifte (7, 8, 9) mit einem genormten Steckverbindungsteil, das mit einer elektrischen Stromversorgungsschnur verbunden ist, zu verhindern.

6. Warmwasserbereiter nach einem der Ansprüche 1 bis 5, dadurch gekennzeichnet, daß die Teile (7a) der Anschlußstifte (7, 8, 9), die sich im wesentlichen senkrecht zu dem Boden (17) des Behälters nach unten erstrecken, alle in einer zum Anschlußblock (6) parallelen Ebene liegen.
